# EUROPÄISCHE PATENTANMELDUNG

(11) **EP 1 083 493 A2**
(43) Veröffentlichungstag der Anmeldung: **14.03.2001**
(21) Anmeldenummer: 00113742.1
(22) Anmeldetag: 29.06.2000
(51) Int. Cl.: G06F 17/30

(54) **Verfahren zur Bildverwaltung von Röntgenbildern**

(30) Priorität: 09.09.1999 DE 19943213; 08.12.1999 DE 19959081
(71) Anmelder: Heimann Systems GmbH, 65205 Wiesbaden (DE)
(72) Erfinder: Beneke, Knut, 55270 Ober-Olm (DE); Ullrich, Stefan, 66128 Saarbrücken (DE)
(74) Vertreter: Dietrich, Barbara

(57) **Zusammenfassung**

Die Erfindung betrifft ein Verfahren zur Bildverwaltung von Röntgenbildern.

Bekanntermaßen werden Röntgenbilder für eine spätere, nachträgliche Betrachtung unter einem Dateinamen in einem Rechner abgelegt. Die Dateinamenvergabe erfolgt insbesondere bei Röntgenprüfanlagen automatisch durch den Rechner.
Nachteilig hierbei ist, daß eine schnelle Wiederauffindbarkeit der gespeicherten Röntgenbilder nur bei Kenntnis des automatisch erzeugten Dateinamens möglich ist.

Hiergegen sieht die vorliegende Lösung vor, beim Anwählen eines Dateinamens ein einem gespeicherten Röntgenbild ( B1, B2, B3) entsprechendes, jedoch verkleinertes Abbild (B1a, B2a, B3a ) in einer Vorschau zusammen mit Zusatzinformationen darzustellen, wobei dies auch in farbiger Darstellung erfolgen kann. Dazu werden bei der Vergabe des Dateinamens das verkleinerte Abbild (B1a, B2a, B3a) und die Zusatzinformationen zusammen mit dem Original des Röntgenbildes ( B1, B2, B3) in einer Bilddatei gespeichert. Für die Vorschauanzeige greift die Bildverwaltung nur auf einen kleinen Datenbereich innerhalb der Bilddatei zurück. Erst wenn eine Vollanzeige erfolgen soll, wird das gesamte Bild (B1, B2, B3) angezeigt, wobei das verkleinerte Abbild (B1a, B2a, B3a) nicht mit angezeigt wird.

## Beschreibung

Die Erfindung betrifft ein Verfahren zur Bildverwaltung von Röntgenbilder nach dem Oberbegriff des Patentanspruchs 1.

Bedingt durch die Notwendigkeit, beispielsweise bei der Sicherheitsüberprüfung auf Flughäfen, Röntgenbilder auch einer späteren, nachträglichen Betrachtung unterziehen zu können, werden diese unter einem Dateinamen in einen Rechner abgelegt. Die Dateinamenvergabe erfolgt insbesondere bei Röntgenprüfanlagen automatisch durch den Rechner, da bei dem hohen Gepäckstückdurchsatz durch eine Röntgenprüfanlage hindurch eine manuelle Dateinamenvergabe nicht möglich ist.
Nachteilig hierbei ist, daß eine schnelle Wiederauffindbarkeit der gespeicherten Röntgenbilder nur bei Kenntnis des automatisch erzeugten Dateinamens möglich ist.

Aus der Computertechnik ist eine grafische Zuordnung von Dateinamen und Dateien in einer Vorschaudarstellung bekannt. Bei den Grafik-Versionen erschient das Bild als verkleinerte, schlecht erkennbare Ausgabe des Originals. Die Dateinamenvergabe erfolgt hierbei durch eine Benutzereingabe. Gespeichert wird nur das Originalbild. Das Abbild wird jeweils nur temporär angelegt und zeitverzögert angezeigt, wenn auf den Dateinamen in der Übersichtdarstellung beim Öffnenmodus geklickt wird.

Bildkodierungsverfahren und - geräte sowie Bildverarbeitungsverfahren und - geräte sind vielseitig bekannt.
Ein Verfahren zur Bildoptimierung eines Röntgenbildes wird in der unveröffentlichten DE 198 55 250.5 beschrieben.

Die Aufgabe der Erfindung besteht nun darin, ein Bildverwaltungsverfahren für Röntgenbilder aufzuzeigen, mit der eine bessere und schnelle Wiederauffindbarkeit des gesuchten Röntgenbildes erfolgt.

Gelöst wird die Aufgabe durch die Merkmale des Patentanspruchs 1.

Der Erfindung liegt dabei die Idee zugrunde, beim Anwählen eines Dateinamens ein einem gespeicherten Röntgenbild entsprechendes, jedoch verkleinertes Abbild in einer Vorschau darzustellen, wobei dies auch in farbiger Darstellung erfolgen kann. Des weiteren werden Zusatzinformationen, wie Abspeicherdatum, Uhrzeit, Name des Bedieners etc. auf eine Oberfläche vorzugsweise außerhalb der Grafikanzeige mit angezeigt. Dazu wird bei der Bilddatenspeicherung der Dateinamen automatisch erzeugt und das verkleinerte Abbild zusammen mit dem Original des Röntgenbildes sowie den Zusatzinformationen in einer Bilddatei gespeichert. Für die Vorschauanzeige greift die Bildverwaltung nur auf das verkleinerte Abbild und die Zusatzinformationen in der Bilddatei zurück. Erst wenn eine Vollanzeige erfolgen soll, wird das gesamte Bild angezeigt, wobei das verkleinerte Abbild (Samtneles) nicht mit angezeigt wird. Die Zusatzinformationen werden im System beispielsweise durch Abfragemoden und durch Anlageninformationen generiert. Durch diese Zusatzinformationen können auch Suchprogramme aufgebaut werden. Dabei kann bereits vor der Abbilddarstellung eine grobe , jedoch zielgerichtete Einschränkung der gesuchten bzw. zu betrachtenden Röntgenbildern erfolgen

Dem Benutzer wird die Bildverwaltung dadurch erleichtert, daß also neben dem Dateinamen der Bilddatei ein kleines Abbild des Originals während der Suche zur Verfügung steht.

Die parallele Hinterlegung der Bilder in eine Bilddatei hat zudem den Vorteil, daß der Bildaufbau sehr schnell erfolgt und somit quasi durch die Bilderliste geblättert werden kann. Das verkleinerte Abbild benötigt nur eine geringe Speicherkapazität.

Anhand eines Ausführungsbeispieles mit Zeichnung soll die Erfindung näher erläutert werden.

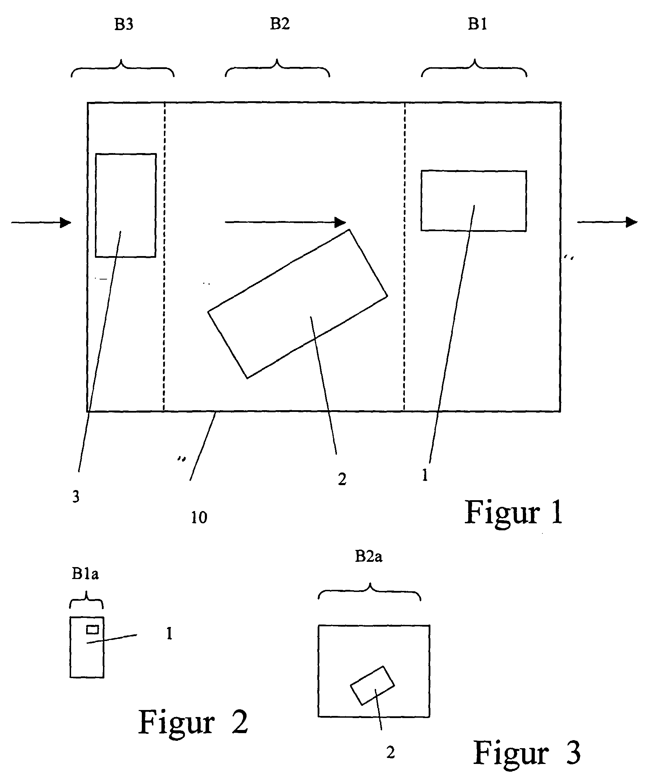

Es zeigt
Figur 1
   eine schematische Darstellung einer Bildaufnahme,
Figur 2
   eine verkleinerte Abbildung des ersten Röntgenbildes aus Figur 1,
Figur 3
   eine verkleinerte Abbildung des zweiten Röntgenbildes aus Fig. 1,
Figur 4
   eine Wiedergabedarstellung des ersten abgespeicherten Röntgenbildes aus Fig. 1,
Figur 5
   eine schematische Darstellung einer gespeicherten Bilddatei.

In Figur 1 ist in schematischer Darstellung ein Monitorbild 10 mit für eine Bilddarstellung eingehenden Röntgenbildern B1, B2 und B3 usw. von Objekten 1, 2, und 3 usw., die sich auf einem nicht näher dargestellten Transportband befinden, aufgezeigt. Diese Röntgenbilder B1, B2, B3 werden beim Abtasten der Objekte 1, 2, 3 erzeugt. Die Röntgenbilder B1, B2 und B3 usw. laufen typischerweise nacheinander und objektabhängig auf dem Monitorbild 10 ein und können dabei unbunt als Grauwertbilder oder auch bunt, d.h. farbig, dargestellt werden.

Befinden sich, wie im vorliegenden Beispiel dargestellt, mehrere Röntgenbilder B1, B2, B3 oder aber auch nur ein Röntgenbild B1 auf dem Monitorbild 10, wird eine objektgebundene Dateizuordnung vorgenommen. Es werden also nicht alle Objekte 1,2,3 usw., die auf dem Monitor 10 gleichzeitig erkennbar sind, in eine Bilddatei mit zugehörigem Dateinamen abgespeichert, sondern jedes Röntgenbild B1, B2, B3 usw. einzeln. Dabei kann beim Einlaufen der Röntgenbilder B1, B2, B3 das jeweils zuletzt eingelaufenen Röntgenbild B1 oder B2 oder B3 usw. gespeichert werden, oder auch alle im Monitorbild 10 sichtbaren Röntgenbilder B1,B2,B3 gleichzeitig. Hierbei ist eine Überschneidung der Bildspeicherung, d. h., das einem Röntgenbild B1, B2, B3 usw. zwei Dateinamen vergeben werden, auszuschließen. Dazu wird ein zwischen den Objekten 1, 2, 3 usw. erkennbarer Freiraum ausgenutzt, der vom Rechner als Lücke erkannt wird und somit die auf dem Monitorbild 10 erscheinenden Objekte 1, 2, 3 usw. in mehrere objektgebundene Röntgenbilder B1, B2, B3 unterteilt. Diese werden dann abgespeichert.

Mit der Speicherung der Röntgenbilder B1, B2 und B3 erfolgt gleichzeitig eine Verkleinerung des jeweils abzuspeichernden Röntgenbildes B1, B2, B3 zu einem entsprechenden Abbild B1a, B2a, B3a, dessen Bilddaten in der selben Bliddatendatei des jeweiligen Röntgenbildes B1, B2, B3 zusammen mit Zusatzinformationen abgespeichert und damit unter dem selben Dateinamen hinterlegt werden. Die Zusatzinformationen beinhalten dabei beispielsweise das Abspeicherdatum und die Uhrzeit des abgespeicherten Räntgenbildes, den Benutzer der Röntgenanlage, die Geräte- und/oder Seriennummer sowie weitere, durch einen Abfragemodus vorgebbare Informationen, die eine Suche und Verwaltung der Röntgenbilder B1, B2, B3 usw. erleichtern.

Ein solches verkleinertes Abbild B1a, B2a ist beispielsweise in den Figuren 2 und 3 dargestellt.

Die Verkleinerung erfolgt dabei vorzugsweise proportional zum jeweiligen Röntgenbild B1, B2 oder B3, um eine eindeutigere Wiedererkennbarkeit bereits bei der Vorschau zu gewährleisten. Für einen Operator ist bereits aus dem verkleinerten Abbild 31a, 32a leicht zu erkennen, ob es sich z. B. um einen Koffer oder einen Beutel usw. handelt. Wird also ein Koffer gesucht, entfällt dieser Beutel bei der Nachbetrachtung. Dabei wird das Abbild B1a, B2a, B3a zum Objekt 1, 2, 3 oder zum Bild des Monitors 10 auf ungefähr ¼ in jeder Dimension verkleinert, so daß eine Verkleinerung des Abbildes auf ca. 1/16 zum Originalbild erfolgt. Das bedeutet, daß nur jeder 16. Bildpixel für das Abbild B1a, B2a oder B3a in die Bilddatei eingeschrieben wird.

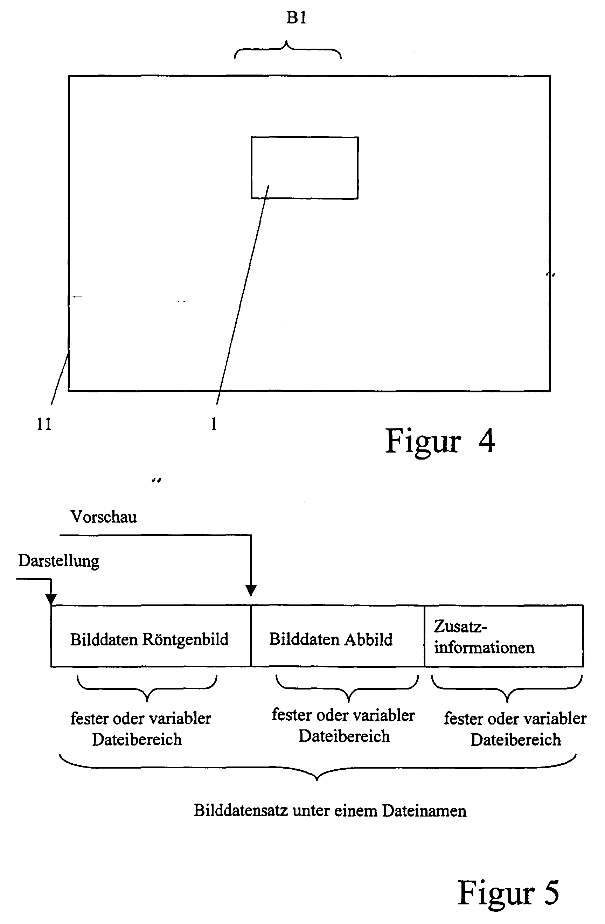

In Figur 5 ist ein allgemeiner Aufbau einer Bilddatei als Bilddatensatz dargestellt, der sich hierbei aus den Bilddaten des ursprünglichen Röntgenbildes B1, B2 oder B3, den Bilddaten der verkleinerten Abbilder B1a, B2a oder B3a sowie den Zusatzinformationen ergibt.
Dazu werden die Bilddaten B1, B2, B3, deren Abbilder B1a, B2a, B3a und den Zusatzinformationen in fest definierten Abschnitt in der Bilddatei eingetragen oder jeweils einem Bereich zugeteilt, auf die schnell zugegriffen werden kann. Es ist aber auch möglich, die Bilddatei in einer Art feste Verzeichnisstruktur oder in Form eine verketteten Liste aufzubauen.

Bei fest definierten Abschnitten werden die Röntgenbilder B1, B2, B3 sowie deren Abbilder B1a, B2a, B3a usw. und Zusatzinformationen erst ab einem vorbestimmten Dateibereich eingetragen und in einem fest vorbestimmten Datenbereich abgespeichert.

Dagegen wird bei der Bereichszuordnung eine Einsparung von Speicherkapazität erreicht. Je nach Größe und damit Pixelanzahl wird nur der Datenbereich der Bilddatei genutzt, der für die Speicherung der vorgenannten Daten, wie Röntgenbild, Abbild und Zusatzinformation notwendig ist.

Die allgemeine Verarbeitung der Röntgenbilder B1, B2, B3 in speicherbare Bildpixel erfolgt in bekannter Art und Weise.

Im sogenannten Öffnenmodus werden die Dateinamen in bekannter Art und Weise in einer Art Liste oder Baumstruktur dargestellt. Mit Anwahl eines Dateinamens erscheint im Öffnenmodus nun in einer Vorschau das jeweils verkleinertes Abbild B1a, B2a, B3a als sogenanntes Daumnagelbild und daneben die Zusatzinformationen. Dadurch kann sehr schnell durch die Liste oder Baumstruktur geblättert werden, da das Abbild abgespeichert vorhanden ist und nicht zusätzlich berechnet und temporär erzeugt werden muß.

Zur Vollanzeige des gesuchten Röntgenbild B1 oder B2 oder B3 wird dieses aus der Liste ausgewählt und beispielsweise auf einem separaten Monitor 11 zur Anzeige gebracht. Ein solches angezeigtes Röntgenbild ist in der Figur 4 dargestellt. Für die Anzeige des jeweiligen Röntgenbildes B1, B2 oder B3 werden nur die Bilddaten aus der Bilddatendatei ausgelesen. Bei der Bildwiedergabe läuft dieses Röntgenbild B1, B2 oder B3 dann in den Monitor 11 ein.

Die Dateinamenvergabe bzw. -vorgabe erfolgt beispielsweise durch den Rechner durch eine automatische Nummernvergabe, die beispielsweise durch Zählen der einlaufenden Objekte 1,2 , 3 generiert wird.
Es ist aber auch möglich, über eine Softwareumsetzung Daten aus der Zusatzinformation bei der Dateinamenvergabe bzw. Dateinamenvorgabe zu berücksichtigen.

Bei bereits entsprechend gekennzeichneten Objekten1, 2, 3 usw. kann die Dateinamenvergabe bzw. -vorgabe auch codeabhängig erfolgen, wenn diese Objekte 1, 2, 3 mit einem Code, beispielsweise einem Barcode, auf einem Anhänger am Objekt 1, 2, 3 versehen werden. Dazu wird per Software der Algorithmus für die Dateinamenvergabe derart geändert, daß der eingelesene Code den Dateinamen festlegt. Dieser Code kann beispielsweise flugund personenabängig sein, so daß eine bessere Dateinamenverwaltung auf Grundlage der Flugnummer eingerichtet und eine Zuordnung des Objektes 1, 2, 3 zu einer bestimmten Person vorgenommen werden kann.
Für nicht gekennzeichnete Objekte 1, 2, 3, wie beispielsweise Handgepäck, kann dagegen eine Dateinamenvergabe nach Uhrzeit und / oder Datum vorgenommen werden, was auch für gekennzeichnete Objekte 1, 2, 3 möglich ist.

## Patentansprüche

1. Verfahren zu Bildverwaltung von Röntgenbildern, die Objekte darstellen und in einer Bilddatei unter einem Dateinamen gespeichert werden und die Information über die Objekte beinhalten, dadurch gekennzeichnet, daß
- bei der Speicherung des Röntgenbildes ( B1, B2, B3) ein verkleinertes Abbild (B1a, B2a, B3a) in Form von Bilddaten in der selben Bilddatei abgelegt wird, und
- dieses jeweilige Abbild (B1a, B2a, B3a) dann in Vorschau angezeigt wird, wenn der vorgegebene Dateiname angewählt wurde.

2. Verfahren nach Anspruch 1, dadurch gekennzeichnet, daß bei der Speicherung des Röntgenbildes ( B1, B2, B3) Zusatzinformationen über die Röntgenbilder (B1, B2, B3) in der selben Bilddatei abgelegt werden, die dann bei der Vorschauanzeige mit dem jeweiligen Abbild (B1a, B2a;B3a) ebenfalls angezeigt werden.

3. Verfahren nach Anspruch 2 , dadurch gekennzeichnet, daß die zur Vorschau bestimmten Abbilder (B1a,B2a,B3a) über ein Suchprogramm auf die Zusatzinformationen vorselektiert wird, wodurch nur die Abbilder (B1a, B2a, B3a) zur Vorschauanzeige gebracht werden, die in vorbestimmten Zusatzinformationen übereinstimmen.

4. Verfahren nach Anspruch 3, dadurch gekennzeichnet, daß das Abbild (B1a, B2a, B3a) vom Röntgenbild (B1, B2, B3) proportional und in allen Dimensionen zum Röntgenbild (B1,B2,B3) verkleinert wird.

5. Verfahren nach Anspruch 3, dadurch gekennzeichnet, daß die Abspeicherung objektgebunden erfolgt.

6. Verfahren nach Anspruch 1, dadurch gekennzeichnet, daß eine Dateinamenvorgabe vom objekteigenen Code abhängig ist.

7. Verfahren nach Anspruch 1, dadurch gekennzeichnet, daß eine Dateinamenvorgabe abhängig von Datum und / oder Uhrzeit erfolgt.
